# EUROPÄISCHE PATENTSCHRIFT

(11) **EP 0 954 980 B1**
(45) Veröffentlichungstag und Bekanntmachung des Hinweises auf die Patenterteilung: **17.12.2003**
(21) Anmeldenummer: 99106897.4
(22) Anmeldetag: 08.04.1999
(51) Int. Cl.: A23L 1/10, A47J 37/04, A47J 27/026

(54) **Verfahren zum Behandeln von körnigem Gut in einem Trommelkocher**
Process for treating particulate material in a cooking drum
Procédé de traitement de produits particulaires dans un tambour de cuisson

(30) Priorität: 06.05.1998 DE 19820007
(43) Veröffentlichungstag der Anmeldung: 10.11.1999
(73) Patentinhaber: Bichsel, Rudolf, 3400 Burgdorf (CH)
(72) Erfinder: Bichsel, Rudolf, 3400 Burgdorf (CH)
(74) Vertreter: Weller, Wolfgang, Dr.rer.nat.

(56) Entgegenhaltungen:
- DD-A- 281 078
- DE-A- 1 679 267
- FR-A- 2 645 716
- US-A- 3 745 909
- US-A- 4 203 358
- US-A- 4 335 649

## Beschreibung

Die Erfindung betrifft ein Verfahren zum Behandeln von körnigem Gut, insbesondere Maisgrits zur Herstellung von Cornflakes, in einem Trommelkocher, in dem das Gut von einem wärmeführenden gasförmigen Medium durchströmt wird.

Bekannte Trommelkocher, in denen ein Kochverfahren durchgeführt wird, sind unter der Typenbezeichnung DSCK der Firma Gebr. Bühler AG, Uzwil, Schweiz, oder auch von der Firma APV Baker, Peterborough, England, "Rotary Serial Cooker" bekannt.

Ein derartiger Trommelkocher weist einen etwa faßförmigen Behälter auf, der um eine horizontal verlaufende Achse drehbar ist. Im Behälter ist das zu behandelnde körnige Gut, bspw. Maisgrits, in Wasser aufgenommen, der Behälter ist über die Hälfte seiner Höhe mit diesem Gut/Wassergemisch gefüllt.

Zur Wärmezufuhr sind Düsen in der Behälterwand vorgesehen, die über längs der Außenseite des Behälters geführte Leitungen mit einem heißen gasförmigen Medium, nämlich heißem Wasserdampf, versorgt werden. Über die Düsen tritt das wärme führende Medium in den Behälter ein. Über weitere Düsen kann das Medium, nach einem Wärmeaustausch, wieder abgeführt werden. Die Anordnung der Düsen ist so, daß die Düsengruppen in etwa diametral gegenüberliegen.

Der Kochprozeß in diesen bekannten Trommelkochern dauert etwa 120 bis 180 Minuten.

Anschließend wird das gekochte Gut aus dem Trommelkocher entnommen und einem Auffangdepot überführt. Der Feuchtigkeitsgehalt des Produktes liegt etwa bei 35 bis 40 %. Von dem Auffangdepot wird das Gut in ein Abdämpfband oder eine Abdämpfschnecke überführt, wobei ein statisches Ausdämpfen der Produktcharge stattfindet. Ausdämpfen ist ein Vorgang, bei dem aufgrund des Wärmeinhaltes des heißen Gutes eine gewisse Feuchtigkeitsmenge vom Gut abdampft. Die Verweildauer des feuchten Gutes in diesem Abschnitt beträgt etwa 20 Minuten, der Feuchtigkeitsverlust beträgt etwa 2 - 4 %.

An dieses Ausdämpfen schließt sich ein Trocknungsprozeß an, bei dem die Oberflächenfeuchte des Gutes von etwa 35 bis 40 % auf einen Bereich von etwa 18 bis 24 abnimmt. Die Verweildauer des Gutes in diesem Trocknungsabschnitt beträgt etwa 90 Minuten.

Der Trocknungsvorgang findet auf Trocknungssieben oder Trocknungsbändern statt.

Anschließend an den Trocknungsprozeß findet noch ein Temperprozeß statt, währenddessen im Kornquerschnitt ein Feuchtigkeitsausgleich stattfindet, um im Gut eine regelmäßige Feuchtigkeit von etwa 19 bis 23 % zu erhalten. Die Verweildauer des Gutes in diesem Temperabschnitt beträgt etwa zwei bis vier Stunden.

Nach dem Tempern wird das Gut weiter verarbeitet, bspw. gewalzt, geröstet, anschließend abgekühlt und ggf. coatiert, um dann das endfertige Produkt, bspw. Cornflakes, Frosties, Crunchy Nuts oder andere Flakes, z.B. Wheat-Flakes zu erhalten.

Die Gesamtdauer von Kochprozeß, anschließendem Trocknungs- und Temperprozeß nimmt eine Zeitspanne von etwa 250 bis 490 Minuten in Anspruch.

Diese Verfahrensweise ist somit äußerst zeitaufwendig.

Ferner muß von dem diskontinuierlichen Betrieb in den einzelnen Trommelkochern in den anschließenden kontinuierlichen Betrieb, also Abdämpfen, Trocknen, Tempern übergegangen werden.

Dies ist apparativ sehr aufwendig.

In einer Weiterbildung der Technologie des Trommelkochens wurde von dem Anmelder ein Trommelkocher dahingehend weiterentwikkelt, daß nur jeweils diejenigen Düsen des sich drehenden Trommelkochers mit Medium versorgt werden, die gerade im mit Gut beladenen Bereich münden.

Ein derartiger Trommelkocher ist Gegenstand der beim Deutschen Patentamt unter dem Aktenzeichen 198 10 240.2 am 10.03.1998 eingereichten Patentanmeldung.

Durch diese konstruktive Ausgestaltung eines Trommelkochers wird erreicht, daß das gasförmige Medium gezielt durch diejenigen Düsen in den Trommelkocher eingeführt wird, die im mit Gut beladenen Bereich münden, also unter der Wasseroberfläche liegen, so daß dann das Medium direkt in das Wasser eingeblasen wird und dort intensiv sowohl mit dem Wasser als auch mit dem zu behandelnden Gut in Wärmeaustausch tritt.

Durch diese Zwangsführung wird eine wesentlich gezieltere, raschere und effektivere Wärmeübertragung beim Kochen bewerkstelligt, was in wesentlich kürzerer Zeit zu einem gleichmäßigen und hervorragenden Kochergebnis führt. Die Zeitersparnis bei vergleichbaren Trommelkochergrößen nach dem eingangs erwähnten Stand der Technik und vergleichbaren Batchmengen liegen im Bereich von 20 bis 30 %.

Vor diesem Hintergrund ist es Aufgabe der vorliegenden Erfindung, ein Verfahren zum Behandeln von körnigem Gut dahingehend weiterzuentwickeln, daß auch die dem Kochvorgang nachgeschalteten Abdämpf-, Trocknungs- und Temperprozesse einfacher, effektiver und in kürzeren Zeiträumen durchgeführt werden können.

Erfindungsgemäß wird die Aufgabe dadurch gelöst, daß das Gut nach dem eigentlichen Kochprozeß im Trommelkocher verbleibt, und daß anschließend durch das Gut so lange ein wärmeführendes, Wasserdampf aufnehmendes, gasförmiges Medium geführt wird, bis ein gewünschter Trocknungszustand erreicht ist.

Es wird also im Gegensatz zum eingangs genannten Stand der Technik nicht das Gut nach dem Kochvorgang aus dem Trommelkocher entnommen und dies anderen Gerätschaften zugeführt, um die Abdämpf-, Trocknungs- und Temperprozesse durchzuführen, sondern das Gut verbleibt im Trommelkocher. Nach Erreichen des gewünschten Kochzustandes wird dem Trommelkocher ein wärmeführendes, Wasserdampf aufnehmendes, gasförmiges Medium zugeführt.

Dieses Zuführen bewirkt, daß das im Trommelkocher noch vorhandene wasserhaltige Kochmedium in den dampfförmigen Zustand übergeführt wird, und von dem eingeführten Medium wird dieser Wasserdampf aufgenommen, da dieses an Wasserdampf ungesättigt ist, und aus dem Trommelkocher abgeführt. Das im Trommelkocher befindliche Gut/Flüssigkeitsgemisch wird also vom Wasser befreit, dieses dampft somit ab. Durch weiteres Hindurchführen des wärmeführenden, Wasserdampf aufnehmenden, gasförmigen Mediums durch die feuchte Gutmenge wird anschließend das Gut getrocknet, d.h. dessen Oberflächenfeuchte wird entsprechend reduziert.

Dieser Vorgang ist durch die intensive Durchführung des Mediums durch das Gut in sehr kurzer Zeit und mit einem gleichmäßigen Trocknungsergebnis durchzuführen.

Das bedeutet, der Trommelkocher wird prinzipiell wie beim Kochprozeß betrieben, d.h. die Trommel dreht sich, und das wärmeführende, Wasserdampf aufnehmende, gasförmige Medium wird durch diejenigen Düsen eingeführt, die mit Produkt belegt sind. Diejenigen Düsen, die nicht vom Produkt belegt sind, die sich also über der Produktoberfläche bewegen, dienen dazu, den von dem eingeführten Medium mitgerissenen Wasserdampf aus dem Trommelkocher abzuführen.

Dadurch, daß das Gut intensiv von dem Trocknungsmedium umströmt wird und das Gut nach wie vor in dem Trommelkocher umgewälzt wird, kann auch zugleich ein Tempervorgang einsetzen oder ggf. durchgeführt werden, so daß die beiden Vorgänge, nämlich Abdämpfen und Trocknen im Trommelkocher durchgeführt und auch der Temperprozeß zumindest eingeleitet werden kann.

Dadurch wird nicht nur eine erhebliche Zeitersparnis erzielt, sondern das gesamte Verfahren ist wesentlich einfacher und mit wesentlich weniger aufwendigen Gerätschaften durchzuführen, nämlich deswegen, da das Gut in demselben Trommelkocher verbleibt, in dem es zuvor gekocht wurde, und dieser lediglich nach dem Kochmodus in dem Abdämpf/Trocknungsmodus betrieben wird.

So ist es bspw. möglich, einen Abdämpf- und Trocknungsprozeß in einem Zeitraum von etwa 10 bis 30 Minuten durchzuführen, was eine erhebliche Zeitersparnis gegenüber den Verfahren nach dem eingangs erwähnten Stand der Technik anzusehen ist.

Somit wird die Aufgabe vollkommen gelöst.

In einer weiteren Ausgestaltung der Erfindung wird ungesättigter, überhitzter Wasserdampf anschließend an den Kochprozeß durch das Gut geführt.

Diese Maßnahme hat den Vorteil, daß mit demselben Medium, nämlich Wasserdampf gearbeitet werden kann wie bereits im Kochprozeß.

Es ist lediglich dafür Sorge zu tragen, daß der Wasserdampf ungesättigt und überhitzt ist, d.h. daß sichergestellt ist, daß das im Trommelkocher aufgenommene Wasser verdampft und von dem durchströmenden Medium mitgerissen werden wird.

In einer weiteren Ausgestaltung der Erfindung wird überhitzter Wasserdampf mit 200 bis 300°C durch das Gut geführt.

Diese Maßnahme hat den Vorteil, daß mit Wasserdampf in diesem Temperaturbereich ein sehr rascher Abdämpf- und Trocknungsprozeß durchgeführt werden kann, ohne daß das Gut negativ dahingehend beeinflußt wird, daß diese relativ hohen Temperaturen unerwünschte Röstvorgänge oder sonstige die Oberfläche negativ beeinflussende Reaktionen auslöst.

In einer weiteren Ausgestaltung der Erfindung geht der Kochprozeß in den Trocknungsprozeß über, indem die wasserhaltige Kochflüssigkeit nach und nach vom wärmeführenden, Wasserdampf aufnehmenden Medium aus dem Trommelkocher abgeführt wird.

Diese Maßnahme hat den Vorteil, daß eine schonende, ohne abrupte Bedingungsänderungen ablaufende Verfahrensführung möglich ist, somit das Gut schonend von dem Kochprozeß in den Abdämpf/Trocknungsprozeß übergegangen wird.

In einer weiteren Ausgestaltung der Erfindung wird das Medium solange durch das Gut geführt, bis ein Trocknungszustand erreicht ist, bei dem das Gut eine Feuchtigkeitsgehalt von 20 bis 30 % aufweist.

Diese Maßnahme hat den Vorteil, daß in dem Trommelkocher nach und nach all diejenigen Vorgänge durchgeführt werden, die bis zu dem gewünschten Endtrocknungszustand des Gutes führen, ohne daß dabei das Gut in verschiedene Gerätschaften überbracht werden muß, sondern daß in dem Trommelkocher kontinuierlich diese Vorgänge, nämlich Kochen, Abdämpfen, Trocknen und ggf. Tempern sich aneinander anschließend durchgeführt werden.

Je nach Betriebsweise kann der bereits in dem Trommelkocher eingeleitete Temperprozeß vollständig durchgeführt werden, nämlich indem das Gut durch Drehen des Trommelkochers umgewälzt und unter Erhalt der Temperatur getempert wird.

In einer weiteren Ausgestaltung der Erfindung wird das Verfahren so geführt, daß der Abdämpf- und Trocknungsprozeß in einem Zeitraum von 10 bis 30 Minuten durchgeführt wird.

Diese Maßnahme hat den Vorteil, daß nicht nur eine sehr zeitsparende Verfahrensweise erzielt wird, sondern daß ein relativ zeitlich begrenzter Übergang von dem eigentlichen Kochmodus in den Abdämpf-/Trocknungsmodus erzielt wird, so daß kein unerwünschtes "Nachkochen" stattfindet.

Es ist möglich, die Wassermenge beim Kochen so zu steuern, daß am Ende des Kochvorganges zwar noch ausreichend Flüssigkeitsmenge vorhanden ist, um den eigentlichen Kochvorgang durchzuführen, die überschüssige Flüssigkeitsmenge jedoch schon relativ gering ist, so daß das Abdämpfen dieser überschüssigen Kochwassermenge relativ rasch durchgeführt werden kann.

In einer weiteren Ausgestaltung der Erfindung wird am Ende des Kochvorganges der unter Druck stehende Innenraum des Trommelkochers entlüftet, und anschließend wird mittels des wärmeführenden, Wasserdampf aufnehmenden, gasförmigen Mediums erneut ein Überdruck im Trommelkocher aufgebaut.

Diese Maßnahme hat den erheblichen Vorteil, daß der Wärmeinhalt des im Trommelkocher aufgenommenen Gut/Flüssigkeitsgemisches beim Entlüftungsvorgang dafür sorgt, daß eine beachtliche Flüssigkeitsmenge abgeführt wird, somit ein effektiver Ausdämpfvorgang stattfindet.

Die Erfindung wird nachfolgend anhand eines ausgewählten Ausführungsbeispiels in Zusammenhang mit den beiliegenden Zeichnungen näher beschrieben und erläutert.

Es zeigt die einzige beiliegende Figur einen Längsschnitt eines Trommelkochers zur Durchführung des erfindungsgemäßen Verfahrens.

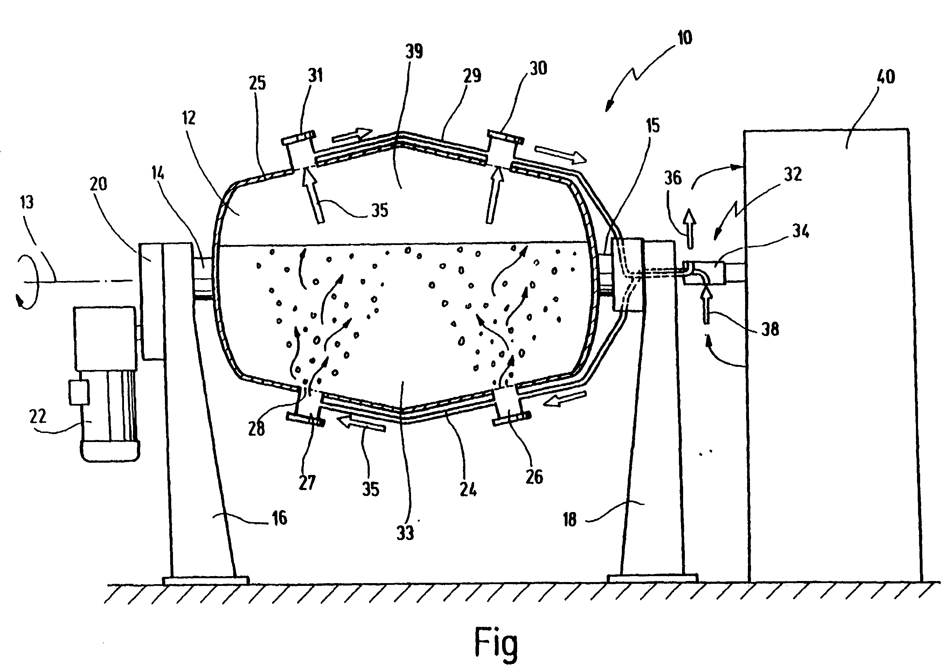

Ein in der Figur dargestellter Trommelkocher ist in seiner Gesamtheit mit der Bezugsziffer 10 bezeichnet.

Der Trommelkocher 10 weist einen liegenden, etwa faßförmigen Behälter 12 auf, der um eine horizontale Drehachse 13 drehbar ist.

Der Behälter 12 ist über seitliche Lager 14, 15 drehbar gelagert in Ständern 16 und 18 aufgenommen. Über einen Kettenantrieb 20, der mit einem Antriebsmotor 22 verbunden ist, wird der Behälter um die Drehachse 13 drehbar angetrieben.

Eine erste Leitung 24 ist längs einer Mittellinie längs der Außenseite des Behälters 12 geführt und verbindet zwei Düsen 26 und 27, die in das Innere des Behälters 12 münden. Jede Düse 26, 27 ist dabei mit einem Sieb 28 versehen.

Dieser Leitung/Düsenanordnung diametral gegenüberliegend ist eine weitere Leitung 29 längs der Außenseite geführt, die zwei Düsen 30 und 31 versorgt, die ebenfalls im Innern des Behälters 12 münden.

Beide Leitungen 24 und 29 münden in eine Steuervorrichtung 32, die mit einer Mehrwegdurchführung 34 versehen ist.

Die Steuervorrichtung 32 ist mit einer Versorgungs/Steuereinheit 40 verbunden, über die die später zu beschreibenden Medien- und Steuervorgänge versorgt bzw. gesteuert werden.

Der Behälter 12 ist mit einem hier nicht dargestellten Deckel versehen, über den das zu behandelnde Gut, bspw. Maisgrits, eingeführt bzw. entnommen werden kann.

Maisgrits sind Maiskörner, die entkeimt und geschält worden sind.

Zusätzlich zu dem Maisgrits wird Wasser in den Behälter 12 eingeführt, wobei die Füllhöhe erheblich über der Höhe der Drehachse 13 liegt, wie das aus der Figur ersichtlich ist.

Zum Durchführen eines Kochvorganges der im Behälter 12 aufgenommenen Produktmenge, also des Gemisches aus Wasser und Maisgrits, wird heißer Dampf mit 120°C unter einem Druck von etwa 1 bis 2 bar durchgeführt.

Die Schaltung bzw. Steuerung über die Steuervorrichtung 32 ist derart, daß das Medium 35 jeweils nur der Leitung zugespeist wird, die diejenigen Düsen versorgt, die im mit Produkt versehenen Bereich 33 münden (Pfeil 38).

Im Laufe des Kochprozesses wird das Flüssigkeitsgemisch, z.B. Wasser und Sirup zum Teil von den Produktkörnern aufgenommen, zum Teil von dem durchströmenden Medium aufgenommen und über die jeweiligen im Entlüftmodus arbeitenden Düsen, im dargestellten Ausführungsbeispiel die Düsen 30 und 31 bzw. die Leitung 29 (siehe Pfeil 36), abgeführt.

Nach Beenden des Kochvorganges wird der Behälter 12 entlüftet, wobei aufgrund des Wärmeinhaltes des Gut/Flüssigkeitsgemisches eine beachtliche Feuchtigkeitsmenge austritt. Anschließend wird der Behälter 12 wieder geschlossen und es wird über diejenigen Düsen, die im Einblasmodus arbeiten, im dargestellten Drehzustand die Düsen 26 und 27, ein wärmeführendes, Wasserdampf aufnehmendes, gasförmiges Medium eingeführt und ein Überdruck von etwa 1 bis 3 bar aufgebaut.

Dieses Medium ist im dargestellten Ausführungsbeispiel ungesättigter Wasserdampf mit einer Temperatur von etwa 200 bis 300°C.

Dieser überhitzte Wasserdampf strömt gleichmäßig verteilt durch das Gut/Flüssigkeitsgemisch und sorgt dafür, daß die Flüssigkeit in den dampfförmigen Zustand übergeführt wird und über die im Entlüftungsmodus arbeitenden Düsen, im dargestellten Drehzustand des Trommelkochers 10 die Düsen 30 und 31, als nahezu gesättigter Dampf abgeführt wird. Somit findet zunächst ein Abdämpfen der überschüssigen Kochflüssigkeit statt. Nachdem die Kochflüssigkeit abgedampft ist, wird weiterhin der überhitzte Wasserdampf zugeführt, so daß dann der eigentliche Trocknungsprozeß einsetzt, dabei wird die Oberflächenfeuchte auf den gewünschten Wert, bspw. auf etwa 20 % herabgesetzt.

Nach wie vor dreht sich der Trommelkocher 10 und das Medium wird über die jeweils im Einblasmodus arbeitenden Düsen, also in der Momentaufnahme der einzigen Figur die Düsen 26 und 27 zugeführt, durchströmt dann gleichmäßig verteilt das Gut und trocknet es dabei. Die aufgenommene Feuchtigkeit wird jeweils über die im Entlüftungsmodus arbeitenden Düsen, in der Momentaufnahme der dargestellten Figur die Düsen 30 und 31, aus dem Trommelkocher abgeführt.

Ist der gewünschte Trocknungszustand erreicht, kann entweder das Gut entnommen werden oder auch noch eine weitere Zeitspanne zu einem Tempervorgang, der bereits durch die intensive Drehung und Vermischung des Gutes eingesetzt hat, im Trommelkocher verbleiben.

Der Abdämpfvorgang und die Durchführung des Trocknungsprozesses ist in einem Zeitraum von 10 bis 30 Minuten durchzuführen.

## Patentansprüche

1. Verfahren zum Behandeln von körnigem Gut, insbesondere Maisgrits zur Herstellung von Cornflakes, in einem Trommelkocher (10), in dem das Gut von einem wärmeführenden gasförmigen Medium durchströmt wird, wobei das Gut nach dem eigentlichen Kochprozeß im Trommelkocher (10) verbleibt, und wobei anschließend durch das Gut so lange ein wärmeführendes, Wasserdampf aufnehmendes, gasförmiges Medium geführt wird, bis ein gewünschter Trocknungszustand erreicht ist.

2. Verfahren nach Anspruch 1, **dadurch gekennzeichnet, daß** ungesättigter, überhitzter Wasserdampf anschließend an den Kochprozeß durch das Gut geführt wird.

3. Verfahren nach Anspruch 2, **dadurch gekennzeichnet, daß** überhitzter Wasserdampf mit 200 bis 300°C durch das Gut geführt wird.

4. Verfahren nach einem der Ansprüche 1 bis 3, **dadurch gekennzeichnet, daß** der Kochprozeß in den Trocknungsprozeß übergeht, indem die wasserhaltige Kochflüssigkeit nach und nach von einem wärmeführenden, Wasserdampf aufnehmenden Medium aus dem Trommelkocher abgeführt wird.

5. Verfahren nach einem der Ansprüche 1 bis 4, **dadurch gekennzeichnet, daß** das wärmeführende, Wasserdampf aufnehmende Medium solange durch das Gut geführt wird, bis ein Trocknungszustand erreicht ist, bei dem das Gut einen Feuchtigkeitsgehalt von etwa 20 bis 30 % aufweist.

6. Verfahren nach einem der Ansprüche 1 bis 5, **dadurch gekennzeichnet, daß** der sich an den eigentlichen Kochprozeß anschließende Trocknungsprozeß während eines Zeitraumes von 10 bis 30 Minuten durchgeführt wird.

7. Verfahren nach einem der Ansprüche 1 bis 6, **dadurch gekennzeichnet, daß** am Ende des Kochprozesses der unter Druck stehende Innenraum des Trommelkochers (10) entlüftet wird, und daß anschließend mittels des wärmeführenden, Wasserdampf aufnehmenden, gasförmigen Mediums erneut ein Überdruck aufgebaut wird.

## Claims

1. A method of treating granular material, in particular maize grits for the production of cornflakes, in a rotary cooker (10), in which a heat-carrying gaseous medium is passed through the material, wherein the material remains in the rotary cooker (10) after the actual cooking process, and wherein a heat-carrying, steam-absorbing, gaseous medium is then passed through the material until a desired state of dryness is achieved.

2. A method according to claim 1, **characterised in that** unsaturated, superheated steam is passed through the material after the cooking process.

3. A method according to claim 2, **characterised in that** superheated steam is passed through the material at 200 to 300°C.

4. A method according to one of claims 1 to 3, **characterised in that** the cooking process develops into the drying process by gradual removal of the water-containing cooking liquid from the rotary cooker using a heat-carrying, steam-absorbing medium.

5. A method according to one of claims 1 to 4, **characterised in that** the heat-carrying, steam-absorbing medium is passed through the material until a state of dryness is reached in which the material has a moisture content of approximately 20 to 30 %.

6. A method according to one of claims 1 to 5, **characterised in that** the drying process subsequent to the actual cooking process is performed for a period of 10 to 30 minutes.

7. A method according to one of claims 1 to 6, **characterised in that**, at the end of the cooking process, the pressurised inner chamber of the rotary cooker (10) is vented and **in that** an overpressure is then built up again by means of the heat-carrying, steam-absorbing, gaseous medium.

## Revendications

1. Procédé de traitement de produits particulaires, notamment de grains de maïs pour la fabrication de cornflakes, dans un tambour de cuisson (10), dans lequel les produits sont traversés par un fluide thermoconducteur sous forme de gaz, les produits restant dans le tambour de cuisson (10) après le processus de cuisson proprement dit ; et un fluide thermoconducteur sous forme de gaz, contenant de la vapeur d'eau, étant ensuite introduit dans les produits jusqu'à obtenir un état de dessiccation souhaité.

2. Procédé selon la revendication 1, **caractérisé en ce que** de la vapeur d'eau non saturée, surchauffée, est ensuite introduite dans les produits pendant le processus de cuisson.

3. Procédé selon la revendication 2, **caractérisé en ce que** de la vapeur d'eau surchauffée de 200 à 300° C est introduite dans les produits.

4. Procédé selon l'une quelconque des revendications 1 à 3, **caractérisé en ce que** le processus de cuisson se transforme en processus de dessiccation en évacuant progressivement le liquide de cuisson hydraté du tambour de cuisson par un fluide thermoconducteur contenant de la vapeur d'eau.

5. Procédé selon l'une quelconque des revendications 1 à 4, **caractérisé en ce que** le fluide thermoconducteur contenant de la vapeur d'eau est introduit dans les produits jusqu'à obtenir un état de dessiccation dans lequel le produit présente une teneur en humidité d'environ 20 à 30%.

6. Procédé selon l'une quelconque des revendications 1 à 5, **caractérisé en ce que** le processus de dessiccation successif au processus de cuisson proprement dit est réalisé pendant une période de 10 à 30 m inutes.

7. Procédé selon l'une quelconque des revendications 1 à 6, **caractérisé en ce qu'**à la fin du processus de cuisson, l'espace intérieur du tambour de cuisson (10) restant sous pression est ventilé, et **en ce qu'**ensuite une surpression est établie de nouveau au moyen du fluide thermoconducteur sous forme de gaz contenant la vapeur d'eau.
